# EUROPÄISCHE PATENTSCHRIFT

(11) **EP 3 047 167 B1**
(45) Veröffentlichungstag und Bekanntmachung des Hinweises auf die Patenterteilung: **27.03.2019**
(21) Anmeldenummer: 14752782.4
(22) Anmeldetag: 11.08.2014
(51) Int. Cl.: F16C 33/74, F16C 33/76, F16C 17/04, F16C 19/10, F16C 19/30, F16C 33/78

(54) **VERFAHREN ZUR OBERFLÄCHENBEHANDLUNG EINES DREHLAGERS SOWIE SCHUTZDICHTUNGSANORDNUNG ZUR DURCHFÜHRUNG DES VERFAHRENS**
METHOD FOR TREATING THE SURFACE OF A ROTARY BEARING AND PROTECTIVE SEAL ARRANGEMENT FOR CARRYING OUT SAID METHOD
PROCÉDÉ POUR TRAITER LA SURFACE D'UN PALIER ROTATIF ET ENSEMBLE D'ÉTANCHÉITÉ DE PROTECTION POUR RÉALISER CE PROCÉDÉ

(30) Priorität: 17.09.2013 DE 102013110247
(43) Veröffentlichungstag der Anmeldung: 27.07.2016
(73) Patentinhaber: thyssenkrupp Rothe Erde GmbH, 44137 Dortmund (DE)
(72) Erfinder: STAKEMEIER, Bernd, 59597 Erwitte (DE); PALMER, Andreas, 88499 Riedlingen (DE)
(74) Vertreter: thyssenkrupp Intellectual Property GmbH
(86) Internationale Anmeldenummer: PCT/EP2014/002201
(87) Internationale Veröffentlichungsnummer: WO 2015/039720

(56) Entgegenhaltungen:
- EP-A1- 0 091 983
- EP-B1- 1 920 176
- WO-A1-2013/093900
- DE-U1- 8 626 160
- US-A- 3 807 107

## Beschreibung

Die vorliegende Erfindung betrifft ein Verfahren zur Oberflächenbehandlung eines Drehlagers, insbesondere eines Wälzlagers, mit einer ersten und einer zweiten Lagerhälfte, die gegeneinander drehbar sind, wobei für den Bearbeitungsvorgang eine Schutzdichtungsanordnung vorgesehen ist, welche nach der Bearbeitung zumindest teilweise und vorzugsweise vollständig entfernt wird. Gegenstand der Erfindung ist auch eine Schutzdichtungsanordnung zur Durchführung des Verfahrens.

In der Praxis besteht das Bedürfnis, Drehlager in Form von Wälzlagern oder Gleitlagern einer abschließenden Oberflächenbehandlung zu unterziehen, wobei jedoch ein Bewegungsspalt zwischen einer ersten und einer zweiten Lagerhälfte vor dem Eindringen von Verschmutzungen zu schützen ist. So ist es beispielsweise bei Großwälzlagern bekannt, diese nach der Anordnung der Wälzkörper zwischen den Lagerhälften an einer Außenfläche mit einem Partikelstrahl zu behandeln und/oder mit einer Beschichtung zu versehen. Als Beschichtung kommt insbesondere ein Zinkflammspritzen in Betracht.

Um die Wälzkörper und die zugeordneten Laufflächen der Lagerhälften vor Verschmutzungen durch Partikel zu schützen, können Schutzdichtungen eingesetzt werden, welche nach der Oberflächenbehandlung entfernt werden. Solche lediglich während der Oberflächenbehandlung vorgesehenen Dichtungen werden auch als Opferdichtungen bezeichnet.

Aus der WO 2013/093900 A1 ist eine Dichtung bekannt, bei der ein außen liegender Dichtungsklauenfinger als Opferdichtung ausgeführt ist und nach einer Oberflächenbehandlung entfernt wird. Der übrige Teil der Dichtung verbleibt in dem Dichtungsspalt und dient dann als permanente Dichtung des Drehlagers. Der als Opferdichtung vorgesehene Dichtungsklauenfinger definiert eine Bearbeitungsgrenze, wobei gerade bei einer Beschichtung durch ein Flammspritzen oder eine Lackierung ein störender Grat verbleiben kann.

Vor diesem Hintergrund liegt der vorliegenden Erfindung die Aufgabe zugrunde, ein verbessertes Verfahren zur Oberflächenbehandlung eines Drehlagers mit einer ersten und einer zweiten Lagerhälfte, die gegeneinander drehbar sind, anzugeben. Des Weiteren soll eine Schutzdichtungsanordnung zur Durchführung des Verfahrens angegeben werden.

Gegenstand der Erfindung und Lösung der Aufgabe ist ein Verfahren zur Oberflächenbehandlung eines Drehlagers mit einer ersten und einer zweiten Lagerhälfte, die gegeneinander drehbar sind, wobei nacheinander eine Schutzdichtungsanordnung, die ein erstes Dichtungsteil mit einer ersten Dichtlippe und ein zweites Dichtungsteil mit zumindest einer zweiten und einer dritten Dichtlippe aufweist, derart in einen Spalt zwischen den Lagerhälften eingesetzt wird, dass an einer ersten Seite des Spaltes die erste Dichtlippe den Spalt von einer zu bearbeitenden Oberfläche trennt und die zweite sowie die dritte Dichtlippe dahinter ausgehend von der zu behandelnden Oberfläche verdeckt angeordnet sind, die zu behandelnde Oberfläche einer Oberflächenbehandlung unterzogen wird, das erste Dichtungsteil entfernt wird, wodurch eine an der ersten Dichtlippe durch die Oberflächenbehandlung gebildete Bearbeitungsgrenze freigelegt wird und wodurch nach der Entfernung der ersten Dichtlippe die behandelte Oberfläche und ein daran anschließender Abschnitt mit der Bearbeitungsgrenze durch die zweite Dichtlippe von dem übrigen Spalt getrennt wird, und die Bearbeitungsgrenze einer Nachbehandlung unterzogen wird, wobei vor der Nutzung des Drehlagers das zweite Dichtungsteil entfernt wird.

Gemäß der vorliegenden Erfindung wird nach der Oberflächenbehandlung und nach der Entfernung der ersten Dichtlippe die Bearbeitungsgrenze nachbehandelt, wobei insbesondere ein bei einer Beschichtung gebildeter Grat entfernt wird. Nach der Entfernung des ersten Dichtungsteils mit der ersten Dichtlippe wird der dahinter noch verbleibende Spalt durch die zweite Dichtlippe des zweiten Dichtungsteils geschützt. Da zumindest auch eine dritte Dichtungslippe vorhanden ist, wird ein zuverlässiger Schutz erreicht. Selbst wenn einzelne Partikel bei der Nachbehandlung unter den zweiten Spalt gelangen können, wird der eigentliche Bewegungsbereich des Drehlagers durch die dritte und vorzugsweise auch eine vierte Dichtlippe zuverlässig geschützt.

Erfindungsgemäß bildet die ganze Schutzdichtungsanordnung eine Opferdichtung, wonach vor der Nutzung des Drehlagers also auch das zweite Dichtungsteil entfernt und vorzugsweise durch eine dauerhafte Dichtung für die Abdichtung des Drehlagers während des Betriebs ersetzt wird. Die Opferdichtung und die dauerhafte Dichtung sind zweckmäßigerweise so aufeinander in ihrer Form abgestimmt, dass die Bearbeitungsgrenze von der dauerhaften Dichtung verdeckt und damit geschützt wird. Wenn beispielsweise eine Beschichtung aufgebracht wird, liegt eine Dichtlippe der dauerhaften Dichtung auf der Beschichtung auf.

Bei der besonders bevorzugten Ausgestaltung mit insgesamt vier Dichtlippen an der ersten Seite des Spaltes dient die erste Dichtlippe an dem ersten Dichtungsteil dazu, das Laufsystem, beispielsweise Wälzkörper mit zugeordneten Laufbahnen, vor Verschmutzungen durch die eigentliche Oberflächenbehandlung zu schützen, wobei als Oberflächenbehandlung ein Materialabtrag und eine Oberflächenverfestigung durch Partikelstrahlen und ein Zinkflammspritzen als Beschichtung in Betracht kommen. Die zweite Dichtlippe dient, wie zuvor beschrieben, dazu, das Laufsystem während der Nachbehandlung, beispielsweise einem Entgraten, gegen Verschmutzungen zu schützen. Die dritte Dichtlippe und die vierte Dichtlippe dienen zunächst während der Nachbehandlung für einen besonders sicheren Schutz gegen ein Eindringen von Verschmutzungen. Insbesondere dient die dritte und die optional vorgesehene vierte Dichtlippe dazu, bei dem Entfernen des zweiten Dichtungsteils das Eindringen von Verschmutzungen zu vermeiden. Die dritte und die optional vorgesehene vierte Lippe dienen bei einem Herausnehmen des zweiten Dichtungsteils nach der Oberflächenbehandlung als eine Art Abstreifer, wodurch Partikel nach außen mitgenommen werden können. Darüber hinaus dienen die dritte und die optional vorgesehene vierte Dichtlippe auch zur sicheren Fixierung der Schutzdichtungsanordnung innerhalb des zu schützenden Spaltes.

Im Rahmen der Erfindung kann die Schutzdichtungsanordnung so ausgestaltet sein, dass diese nur in dem zu schützenden Spalt angeordnet und gehalten ist. Gerade bei einer solchen Ausgestaltung ist es dann zweckmäßig, wenn die beschriebene Anordnung von mehreren Dichtlippen nicht nur an einer Seite des Spaltes, sondern an beiden Seiten des Spaltes vorhanden ist.

Häufig ist aber eine der beiden Lagerhälften mit einer Haltenut versehen, um nach der Oberflächenbehandlung und der Entfernung der Schutzdichtungsanordnung eine dauerhafte Dichtung aufzunehmen. Bei einer solchen Ausgestaltung des Drehlagers ist es zweckmäßig, wenn das zweite Dichtungsteil mit einem Vorsprung in die Haltenut der ersten bzw. der zweiten Lagerhälfte eingesetzt wird.

Gegenstand der Erfindung ist auch die Schutzdichtungsanordnung selbst, welche ein erstes Dichtungsteil und ein zweites Dichtungsteil aufweist, die miteinander verbunden und an einer Trennfläche voneinander trennbar sind, wobei das erste Dichtungsteil an einer ersten Seite der Schutzdichtungsanordnung ausgehend von einer Stirnfläche eine erste Dichtlippe aufweist. Ausgehend von einer solchen aus der WO 2013/93900 A1 bekannten Ausgestaltung ist erfindungsgemäß vorgesehen, dass das zweite Dichtungsteil an der ersten Seite der Dichtungsanordnung zumindest zwei Dichtlippen aufweist, die ausgehend von der Stirnfläche hinter der ersten Dichtlippe angeordnet sind, wobei das zweite Dichtungsteil (2) eine U-Form mit einem ersten und einem zweiten sich von dem ersten Dichtungsteil (1) weg erstreckenden Schenkeln (12, 13) aufweist, wobei die zumindest zwei an der ersten Seite angeordneten Dichtlippen (7b, 7c) zur Abdichtung eines Spaltes (4) an dem ersten Schenkel (12) angeordnet sind und wobei der zweite Schenkel (13) zur Fixierung der Schutzdichtungsanordnung in einer Haltenut (11) vorgesehen ist. Wie zuvor beschrieben, können an der ersten Seite der Schutzdichtungsanordnung, die der ersten Seite des Spaltes zugeordnet ist, an dem zweiten Dichtungsteil drei und damit an dem ersten und zweiten Dichtungsteil zusammen insgesamt vier Dichtlippen hintereinander angeordnet sein.

Erfindungsgemäß ist vorgesehen, dass dann, wenn die Schutzdichtungsanordnung für ein Drehlager mit einer Haltenut vorgesehen ist, das zweite Dichtungsteil eine U-Form mit einem ersten und einem zweiten Schenkel aufweist, die sich von dem ersten Dichtungsteil weg erstrecken, wobei die zumindest zwei an der ersten Seite des zweiten Dichtungsteils angeordneten Dichtlippen zur Abdichtung eines Spaltes an dem ersten Schenkel angeordnet sind und wobei der zweite Schenkel zur Fixierung der Schutzdichtungsanordnung in der Haltenut vorgesehen ist.

Gemäß einer bevorzugten Weiterbildung der beschriebenen Ausgestaltung weist der erste Schenkel gegenüberliegend der zumindest zwei Dichtlippen eine weitere Dichtlippe auf, welche auch die gegenüberliegende Seite des Spaltes schützt und eine sichere Fixierung der Schutzdichtungsanordnung in dem Spalt gewährleistet.

Das erste und das zweite Dichtungsteil sind vorzugsweise aus einem elastischen Kunststoff gebildet. Sofern eine Beschichtung durch ein Flammspritzen, insbesondere ein Zinkflammspritzen, erfolgt, ist ein entsprechend temperaturbeständiger Kunststoff auszuwählen.

Die Erfindung wird im Folgenden anhand einer lediglich ein Ausführungsbeispiel darstellenden Zeichnung erläutert. Es zeigen:
- Fig. 1: eine erfindungsgemäße Schutzdichtanordnung in dem Spalt eines Wälzlagers und
- Fig. 2: eine alternative Ausgestaltung der Schutzdichtungsanordnung.

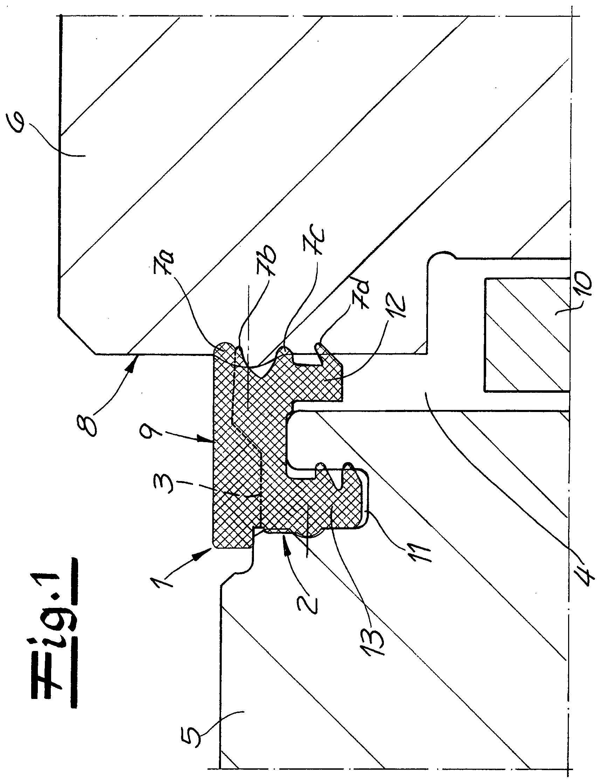

Die Fig. 1 zeigt eine Schutzdichtungsanordnung mit einem ersten Dichtungsteil 1 und einem zweiten Dichtungsteil 2, die miteinander verbunden und einer lediglich schematisch angedeuteten Trennfläche 3 voneinander trennbar sind. Gemäß der Fig. 1 ist die Schutzdichtung dazu vorgesehen, an einem Wälzlager den Spalt 4 zwischen einer ersten Lagerhälfte 5 und einer zweiten Lagerhälfte 6 bei einer Oberflächenbehandlung zu schützen, wobei die gesamte Schutzdichtung nach dem Abschluss der Oberflächenbehandlung entfernt wird. Aus den Figuren wird deutlich, dass die Schutzdichtungsanordnung sich bei dem Einsetzen in der Spalte 4 elastisch verformt. Um die Struktur der Schutzdichtungsanordnung besser erkennen zu können, ist diese aber unverformt dargestellt.

Gemäß der Fig. 1 ist die Schutzdichtung derart in den Spalt 4 eingesetzt, dass an einer ersten Seite des Spaltes eine erste Dichtlippe 7a den Spalt 4 von einer zu behandelnden Oberfläche 8 trennt.

Die erste Dichtlippe 7a ist an dem ersten Dichtungsteil 1 angeordnet, während ausgehend von einer Stirnfläche 9 des ersten Dichtungsteils 1 eine zweite, eine dritte und eine vierte Dichtlippe 7a, 7b, 7c dahinter an dem zweiten Dichtungsteil 2 angeordnet sind.

Mit der gemäß Fig. 1 eingesetzten Schutzdichtungsanordnung erfolgt beispielsweise ein Partikelstrahlen und eine Beschichtung durch Zinkflammspritzen an der zu behandelnden Oberfläche 8.

Nach einer solchen Oberflächenbehandlung wird das erste Dichtungsteil 1 entlang der Trennfläche 3 von dem zweiten Dichtungsteil 2 getrennt, wodurch auch die erste Dichtlippe 7a entfernt wird und wodurch die an der ersten Dichtlippe 7a gebildete Bearbeitungsgrenze freigelegt wird.

Nach der Entfernung des ersten Dichtungsteils 1 mit der ersten Dichtlippe 7a wird die behandelte Oberfläche und ein daran anschließender Abschnitt mit der Bearbeitungsgrenze durch die zweite Dichtlippe 7b von dem übrigen Spalt 4 getrennt. Es kann deshalb die bei der Oberflächenbehandlung gebildete Bearbeitungsgrenze ohne Weiteres einer Nachbehandlung unterzogen werden, ohne dass Verschmutzungen in den Spalt 4 eindringen können. Wenn beispielsweise eine Beschichtung durch Flammspritzen, insbesondere Zinkflammspritzen, oder auch eine Lackierung als Oberflächenbehandlung erfolgte, kann ein zuvor an der ersten Dichtlippe 7a gebildeter Grat entfernt werden. Auch bei der unmittelbar angrenzenden Nachbehandlung wird Schmutz zunächst von der zweiten Dichtlippe 7b zurückgehalten, wobei auch die weiteren Dichtlippen 7c und 7d als zusätzliche Absicherung dienen.

Wesentliche Funktion der an dem zweiten Dichtungsteil 2 angeordneten dritten Dichtlippe 7c und vierten Dichtlippe 7d ist jedoch der Schutz des Spaltes 4 vor Verschmutzungen bei einem Herausziehen des zweiten Dichtungsteils 2, wobei die dritte und die vierte Dichtlippe 7c, 7d dann als eine Art Abstreifelement vorgesehen sind. Darüber hinaus bewirken die dritte und die vierte Dichtlippe 7c, 7d einen sicheren Halt der gesamten Schutzdichtungsanordnung innerhalb des Spaltes 4.

Die Fig. 1 zeigt exemplarisch ein Wälzlager, bei dem zwischen dem ersten Dichtungsteil 1 und dem zweiten Dichtungsteil 2 Wälzkörper 10 angeordnet sind. Nach der beschriebenen Oberflächenbehandlung des Drehlagers wird die in der Fig. 1 dargestellte Schutzdichtungsanordnung vollständig entfernt, wobei dann der Spalt 4 durch eine andere, permanente Dichtung verschlossen wird.

Für diese permanente Dichtung ist in der ersten Lagerhälfte 5 eine Haltenut 11 vorgesehen, in welche auch die Schutzdichtungsanordnung mit dem zweiten Dichtungsteil 2 eingreift. Gemäß dem dargestellten Ausführungsbeispiel weist das zweite Dichtungsteil 2 im Querschnitt eine U-Form mit einem ersten Schenkel 12 und einem zweiten Schenkel 13 auf. An dem ersten Schenkel 12 sind die zweite, die dritte und die vierte Dichtlippe 7b, 7c, 7d angeordnet, während das zweite Dichtungsteil 2 mit dem zweiten Schenkel 13 in die Haltenut 11 eingesetzt ist. Der zweite Schenkel 13 weist Vorsprünge und Lippen auf, um innerhalb der Haltenut 11 fixiert zu werden.

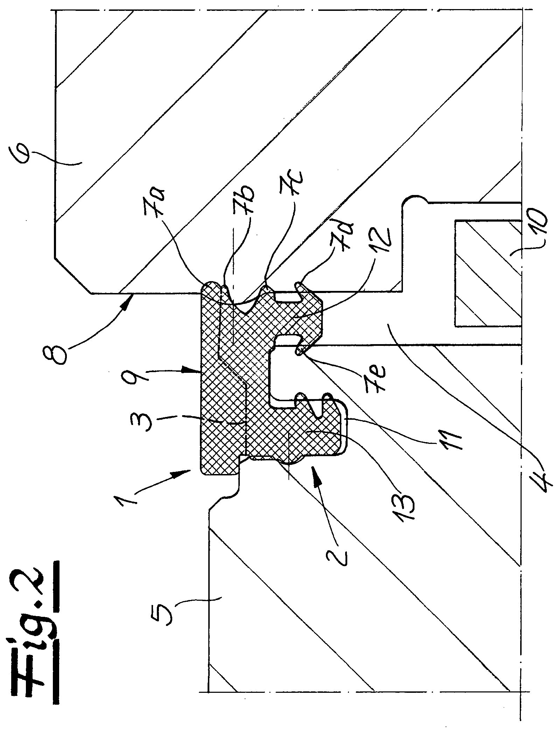

Die Fig. 2 zeigt eine Variante der in Fig. 1 dargestellten Dichtungsanordnung, wobei ausgehend von einer ansonsten übereinstimmenden konstruktiven Ausgestaltung an dem ersten Schenkel 12 gegenüberliegend der vierten Dichtlippe 7d eine weitere Dichtlippe 7e angeordnet ist. Diese gegenüberliegende Dichtlippe 7e bewirkt auch an der zweiten Seite des Spaltes 4 eine zuverlässige Abdichtung, wobei auch bei einem Entfernen des zweiten Dichtungsteils 2 aus dem Spalt 4 dort eine abstreifende Wirkung gegenüber Verschmutzungen gewährleistet wird. Darüber hinaus ist die Schutzdichtungsanordnung mit dem zweiten Dichtungsteil 2 gemäß der Fig. 2 mit einer größeren Haltekraft in dem Spalt 4 fixiert.

Insbesondere aus der Fig. 2 ist ersichtlich, dass im Rahmen der Erfindung auch Ausgestaltungen einer Schutzdichtungsanordnung in Betracht kommen, bei der eine Fixierung nur innerhalb des Spaltes 4 erfolgt, wobei dann an beiden Seiten des Spaltes jeweils vier Dichtlippen vorhanden sein können.

## Patentansprüche

1. Verfahren zur Oberflächenbehandlung eines Drehlagers mit einer ersten und einer zweiten Lagerhälfte (5, 6), die gegeneinander drehbar sind, wobei nacheinander
a) eine Schutzdichtungsanordnung, die ein erstes Dichtungsteil (1) mit einer ersten Dichtlippe (7a) und ein zweites Dichtungsteil (2) mit zumindest einer zweiten und einer dritten Dichtlippe (7b, 7c) aufweist, derart in einen Spalt (4) zwischen den Lagerhälften (5, 6) eingesetzt wird, dass an einer ersten Seite des Spaltes (4) die erste Dichtlippe (7a) den Spalt (4) von einer zu behandelnden Oberfläche (8) trennt und die zweite sowie dritte Dichtlippe (7b, 7c) dahinter verdeckt angeordnet sind,
b) die zu behandelnde Oberfläche (8) einer Oberflächenbehandlung unterzogen wird,
c) das erste Dichtungsteil (1) entfernt wird, wodurch eine an der ersten Dichtlippe (7a) durch die Oberflächenbehandlung gebildete Bearbeitungsgrenze freigelegt wird, und wodurch nach der Entfernung der ersten Dichtlippe (7a) die behandelte Oberfläche und ein daran anschließender Abschnitt mit der Bearbeitungsgrenze durch die zweite Dichtlippe (7b) von dem Spalt (4) getrennt wird, und
d) die Bearbeitungsgrenze einer Nachbehandlung unterzogen wird,
e) wobei vor der Nutzung des Drehlagers das zweite Dichtungsteil (2) entfernt wird.

2. Verfahren nach Anspruch 1, wobei das zweite Dichtungsteil (2) an der ersten Seite des Spaltes (4) zusätzlich zu der zweiten und der dritten Dichtlippe (7b, 7c) eine vierte Dichtlippe (7d) aufweist.

3. Verfahren nach einem der Ansprüche 1 bis 2, wobei bei der Oberflächenbehandlung zumindest ein materialabtragender Schritt, insbesondere eine Behandlung mit einem Partikelstrahl, erfolgt.

4. Verfahren nach einem der Ansprüche 1 bis 3, wobei bei der Oberflächenbehandlung eine Beschichtung, insbesondere ein Flammspritzen, erfolgt.

5. Verfahren nach einem der Ansprüche 1 bis 4, wobei das zweite Dichtungsteil (2) mit einem Vorsprung in eine Haltenut (11) der ersten oder der zweiten Lagerhälfte (5, 6) eingesetzt wird.

6. Schutzdichtungsanordnung zur Durchführung des Verfahrens nach einem der Ansprüche 1 bis 5, mit einem ersten Dichtungsteil (1) und einem zweiten Dichtungsteil (2), die miteinander verbunden und an einer Trennfläche (3) voneinander trennbar sind, wobei das erste Dichtungsteil (1) an einer ersten Seite der Schutzdichtungsanordnung ausgehend von einer Stirnfläche (9) eine erste Dichtlippe (7a) aufweist, **dadurch gekennzeichnet, dass** das zweite Dichtungsteil (2) an der ersten Seite der Dichtungsanordnung zumindest zwei Dichtlippen (7b, 7c) aufweist, die ausgehend von der Stirnfläche (9) hinter der ersten Dichtlippe (7a) angeordnet sind, wobei das zweite Dichtungsteil (2) eine U-Form mit einem ersten und einem zweiten sich von dem ersten Dichtungsteil (1) weg erstreckenden Schenkeln (12, 13) aufweist, wobei die zumindest zwei an der ersten Seite angeordneten Dichtlippen (7b, 7c) zur Abdichtung eines Spaltes (4) an dem ersten Schenkel (12) angeordnet sind und wobei der zweite Schenkel (13) zur Fixierung der Schutzdichtungsanordnung in einer Haltenut (11) vorgesehen ist.

7. Schutzdichtungsanordnung nach Anspruch 6, **dadurch gekennzeichnet, dass** das zweite Dichtungsteil (2) an der ersten Seite der Schutzdichtungsanordnung drei hintereinander angeordnete Dichtlippen (7b, 7c, 7d) aufweist.

8. Schutzdichtungsanordnung nach Anspruch 7, wobei der erste Schenkel (12) gegenüberliegend der zumindest zwei Dichtlippen (7b, 7a) zumindest eine weitere Dichtlippe (7e) aufweist.

9. Schutzdichtungsanordnung nach einem der Ansprüche 6 bis 8, **dadurch gekennzeichnet, dass** das erste Dichtungsteil (1) und das zweite Dichtungsteil (2) aus einem elastischen Kunststoff gebildet sind.

## Claims

1. Method for the surface treatment of a rotary bearing having a first and a second bearing half (5, 6) rotatable in relation to one another, wherein in succession
a) a protective seal arrangement, which has a first seal part (1) with a first sealing lip (7a) and a second seal part (2) with at least a second and a third sealing lip (7b, 7c), is inserted into a gap (4) between the bearing halves (5, 6) in such a manner that, on a first side of the gap (4), the first sealing lip (7a) separates the gap (4) from a surface (8) to be treated and the second and third sealing lips (7b, 7c) are arranged concealed therebehind,
b) the surface (8) to be treated is subjected to a surface treatment,
c) the first seal part (1) is removed, as a result of which a machining boundary formed on the first sealing lip (7a) by the surface treatment is exposed, and as a result of which, after the removal of the first sealing lip (7a), the treated surface and an adjoining portion with the machining boundary are separated from the gap (4) by the second sealing lip (7b), and
d) the machining boundary is subjected to a post-treatment,
e) wherein the second seal part (2) is removed prior to the use of the rotary bearing.

2. Method according to Claim 1, wherein, in addition to the second and the third sealing lips (7b, 7c), the second seal part (2) has a fourth sealing lip (7d) on the first side of the gap (4).

3. Method according to either of Claims 1 and 2, wherein at least one material-removing step, in particular a treatment with a particle jet, is effected during the surface treatment.

4. Method according to one of Claims 1 to 3, wherein a coating process, in particular flame spraying, is effected during the surface treatment.

5. Method according to one of Claims 1 to 4, wherein the second seal part (2) is inserted with a protrusion into a retaining groove (11) of the first or of the second bearing half (5, 6).

6. Protective seal arrangement for carrying out the method according to one of Claims 1 to 5, having a first seal part (1) and a second seal part (2) which are connected to one another and can be separated from one another at a separation face (3), wherein the first seal part (1) has a first sealing lip (7a) on a first side of the protective seal arrangement proceeding from an end face (9), **characterized in that**, on the first side of the seal arrangement, the second seal part (2) has at least two sealing lips (7b, 7c), which are arranged behind the first sealing lip (7a) proceeding from the end face (9), wherein the second seal part (2) is U-shaped with a first and a second leg (12, 13) which extend away from the first seal part (1), wherein the at least two sealing lips (7b, 7c) arranged on the first side are arranged on the first leg (12) for sealing off a gap (4), and wherein the second leg (13) is provided for fixing the protective seal arrangement in a retaining groove (11).

7. Protective seal arrangement according to Claim 6, **characterized in that** the second seal part (2) has three sealing lips (7b, 7c, 7d) arranged one behind another on the first side of the protective seal arrangement.

8. Protective seal arrangement according to Claim 7, wherein the first leg (12) has at least one further sealing lip (7e) lying opposite the at least two sealing lips (7b, 7a).

9. Protective seal arrangement according to one of Claims 6 to 8, **characterized in that** the first seal part (1) and the second seal part (2) are formed from an elastic plastic.

## Revendications

1. Procédé permettant de traiter la surface d'un palier rotatif comprenant une première et une deuxième moitié de palier (5, 6) qui peuvent tourner l'une par rapport à l'autre, dans lequel, successivement
a) un ensemble d'étanchéité de protection, qui comprend une première partie d'étanchéité (1) dotée d'une première lèvre d'étanchéité (7a) et une deuxième partie d'étanchéité (2) dotée d'au moins une deuxième et une troisième lèvre d'étanchéité (7b, 7c), est inséré dans un interstice (4) entre les moitiés de palier (5, 6), de telle sorte que, sur un premier côté de l'interstice (4), la première lèvre d'étanchéité (7a) sépare l'interstice (4) d'une surface (8) à traiter et la deuxième ainsi que la troisième lèvre d'étanchéité (7b, 7c) soient disposées de manière cachée derrière celle-ci,
b) la surface (8) à traiter est soumise à un traitement de surface,
c) la première partie d'étanchéité (1) est enlevée, de sorte qu'une limite de traitement formée sur la première lèvre d'étanchéité (7a) par le traitement de surface soit découverte, et de sorte qu'après l'enlèvement de la première lèvre d'étanchéité (7a), la surface traitée et une partie s'y raccordant dotée de la limite de traitement soient séparées de l'interstice (4) par la deuxième lèvre d'étanchéité (7b), et
d) la limite de traitement est soumise à un traitement ultérieur,
e) la deuxième partie d'étanchéité (2) étant enlevée avant l'utilisation du palier rotatif.

2. Procédé selon la revendication 1, dans lequel la deuxième partie d'étanchéité (2) comprend, en plus de la deuxième et de la troisième lèvre d'étanchéité (7b, 7c), une quatrième lèvre d'étanchéité (7d) sur le premier côté de l'interstice (4).

3. Procédé selon l'une quelconque des revendications 1 et 2, dans lequel, lors du traitement de surface, au moins une étape d'enlèvement de matière, en particulier un traitement à l'aide d'un jet de particules, a lieu.

4. Procédé selon l'une quelconque des revendications 1 à 3, dans lequel, lors du traitement de surface, un revêtement, en particulier une métallisation par projection à la flamme, a lieu.

5. Procédé selon l'une quelconque des revendications 1 à 4, dans lequel la deuxième partie d'étanchéité (2) est insérée par une saillie dans une rainure de retenue (11) de la première ou de la deuxième moitié de palier (5, 6).

6. Ensemble d'étanchéité de protection permettant de mettre en oeuvre le procédé selon l'une quelconque des revendications 1 à 5, comprenant une première partie d'étanchéité (1) et une deuxième partie d'étanchéité (2) qui sont reliées l'une à l'autre et peuvent être séparées l'une de l'autre au niveau d'une surface de séparation (3), la première partie d'étanchéité (1) comprenant, sur un premier côté de l'ensemble d'étanchéité de protection, à partir d'une surface frontale (9), une première lèvre d'étanchéité (7a), **caractérisé en ce que** la deuxième partie d'étanchéité (2) comprend, sur le premier côté de l'ensemble d'étanchéité, au moins deux lèvres d'étanchéité (7b, 7c) qui sont disposées derrière la première lèvre d'étanchéité (7a) à partir de la surface frontale (9), la deuxième partie d'étanchéité (2) présentant une forme en U dotée d'une première et d'une deuxième branche (12, 13) s'écartant de la première partie d'étanchéité (1), lesdites au moins deux lèvres d'étanchéité (7b, 7c) disposées sur le premier côté étant disposées sur la première branche (12) pour fermer hermétiquement un interstice (4), et la deuxième branche (13) étant située dans une rainure de retenue (11) pour fixer l'ensemble d'étanchéité de protection.

7. Ensemble d'étanchéité de protection selon la revendication 6, **caractérisé en ce que** la deuxième partie d'étanchéité (2) comprend, sur le premier côté de l'ensemble d'étanchéité de protection, trois lèvres d'étanchéité (7b, 7c, 7d) disposées les unes derrière les autres.

8. Ensemble d'étanchéité de protection selon la revendication 7, dans lequel la première branche (12) comprend, de manière opposée auxdites au moins deux lèvres d'étanchéité (7b, 7a), au moins une autre lèvre d'étanchéité (7e).

9. Ensemble d'étanchéité de protection selon l'une quelconque des revendications 6 à 8, **caractérisé en ce que** la première partie d'étanchéité (1) et la deuxième partie d'étanchéité (2) sont formées à partir d'une matière synthétique élastique.
